# EUROPEAN PATENT SPECIFICATION

(11) **EP 2 592 971 B1**
(45) Date of publication and mention of the grant of the patent: **02.04.2014**
(21) Application number: 11743377.1
(22) Date of filing: 15.07.2011
(51) Int. Cl.: A47C 1/022, A47C 3/025, A47C 17/04, A47C 1/14

(54) **A SITTING ARRANGEMENT**
EINE SITZANORDNUNG
UN ENSEMBLE D'ASSISE

(30) Priority: 19.10.2010 WO PCT/NO2010/000369; 15.07.2010 NO 20101008
(43) Date of publication of application: 22.05.2013
(73) Proprietor: Ekornes ASA, 6222 Ikornnes (NO)
(72) Inventor: SOLHEIM, Albert, N-6222 Ikornnes (NO)
(74) Representative: Oslo Patentkontor AS
(86) International application number: PCT/NO2011/000209
(87) International publication number: WO 2012/008852

(56) References cited:
- WO-A2-2011/049461
- CA-A1- 2 095 295
- GB-A- 437 114
- GB-A- 513 387
- US-A- 2 716 566
- US-A- 3 974 530
- US-B1- 6 168 233

## Description

The present invention relates to a chaise longue, also called long seat, according to the preamble of claim 1 and that can comprise an elastic joint suitable for the use in it.

From US Patent No. 3,974,630, it is known an adjustable base for the use in a bed, sofa or chaise longue comprising a back rest 5 being hinged to a seat 2 that is hinged to a foot part or shutter 3. The back rest is hinged in a rotatable joint at the lower part of this, just above the hinging to the seat. Likewise, the seat is hinged to a rotatable joint, where there also is a slide to receive longitudinal movement in relation to the backrest. For the same reason, the lower part of the shuttle is attached to a slide guide. The angle between the back rest ad the seat is adjustable in preset levels. The angle is locked in each level.

Another chaise longue is known from CA 2095 295 A1.

It is an object of the present invention to provide a chaise longue being easy to readjust during use by redistribution of body mass. Furthermore, is is an object to provide an adjustable chaise longue having a basic and robust design without too many movable parts.

The structure comprises a hinged joint being easy to mount and maintain. It is an object of the present invention to provide a rotatable joint suitable for use in chaise longues and other furniture having tiltable parts exposed to moving and/or substantial loads, such as one or more moving persons.

It is needed for a joint for furniture with little wear of the joint and consequently a long durability of the joint. Furthermore it is a desire to provide a relatively simple design of the joint, in order for the production costs to be lower. It is also an object to provide a silent joint that will not creak when being loaded and rotated or tilted.

This is obtained by a chaise longue according to the attached claims 1 to 5.

The sitting arrangement will be further described by means of embodiments in the attached drawings where:
Fig. 1 shows a chaise longue according to the invention, in plane, longitudinal section and cross section,
Fig. 2 shows the chaise longue with the seat in a second position,
Fig. 3 shows a flexible joint being a part of the chaise longue, in perspective a and cross section b.

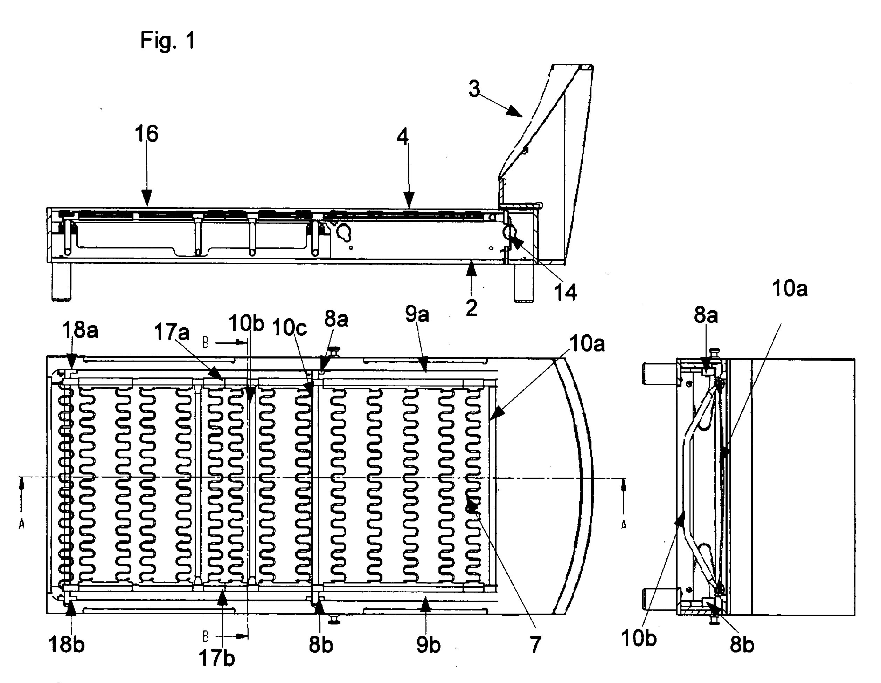

Fig. 1 shows a chaise longue according to the invention. It comprises a fixed back rest 3, a seat part 4 with a bottom frame 6, seat springs 7 and rotatable mounting devices 8a, 8b. The seat frame or bottom frame 6 of the embodiment has the shape of a quadrangle with four sides forming two mainly straight parallel side bars 9a, 9b being arranged on the sides being parallel with the longitudinal direction of the chaise longue, and two parallel cross bars 10a, 10b along the two remaining sides of the quadrangle. The seat springs 7 are stretched over the bottom frame 6 between the side bars 9a, 9b thereby forming a resilient sitting plane, whereon a cushion or the like can be placed. The sitting part is attached to the frame of the sofa 2 by means of rotatable mounting devices 8a, 8b. More precisely, the bottom frame comprises a third cross bar 10c being prolonged over the periphery of the bottom frame, and where the ends of the cross bar is suspended in mounting devices 8a, 8b of the sofa frame. The mounting devices are in the form of bearing blocks that can be made in any suitable material, such as three or metal, but which are preferably made in a plastic material, like here. The third cross bar form a further reinforcing element, but otherwise the suspension arrangement can be implemented in a simpler way, for example by welding short pipe sockets to the frame, which in return anchor the mounting devices to the sofa frame.

In the shown embodiment, the mounting devices 8a, 8b are attached asymmetrically to the frame in relation to a centre axis through the seat part 4, so that the fulcrum joint will be between the knee and the hip of a user sitting in an ordinary manner with parallel legs and the back resting towards the back rest of the chaise longue. The mounting device can as an example be arranged 1/3 of the distance from the front edge of the seat towards the back rest. It is an intention that the mounting device 8 is arranged in such a way that it perform a self balancing tilt. The mounting device is preferably not provided with a lock or adjustable brake, as the tilt is confined by the mounting mechanism and the placement of this, in combination with balance springs 14. However, the chaise longue can be provided with some sort of final stops limiting the swing of the seat part.

The chaise longue is provided with balance springs 14. In the shown figures, the balance springs are arranged between the bottom frame and the sofa frame below the back rest. However, the balance springs 14 can be arranged along the side panels of the sofa frame 2 instead of in the side of the sofa frame below the back rest. A skilled person that will construct a sitting arrangement according to the invention, is free to arrange spring devices where it is the most appropriate to obtain a desired balance in the seat part and sufficient resistance against tilting in order to make the tilting of the seat part comfortable for the user. There can also be used other kinds of spring devices, such as flat coil springs, leaf springs, rubber band devices or arrangements, torsional springs or others. Instead of arranging these at the end parts of the cross bars, the springs can be arranged in relation to the rotatable mounting arrangement between the seat part and the bottom frame.

At the front edge of the seat part a shutter or flap 16 is hinged in hinge points 17a, 17b. The flap is also rotatably attached to the sofa frame 2 at the opposite end of the attachment to the seat part, in rotatable mounting places 18a, 18b. When the seat part 4 is tilting in one direction, the flap 16 will tilt in opposite phase with this and thereby forming a "bend" or break in the sitting plane or surface and an elevation in the area by the knees of one sitting in the chaise longue provided with the sitting arrangement. This will increase the sitting comfort to a user sitting in the chaise longue. If the user chooses to lie down or more than one person are sitting on the chaise longue, the seat part will tilt back in passive position, so that a straight continuous sitting surface is formed, suitable for accommodating one person lying down, more persons sitting and persons partially slung on the sofa.

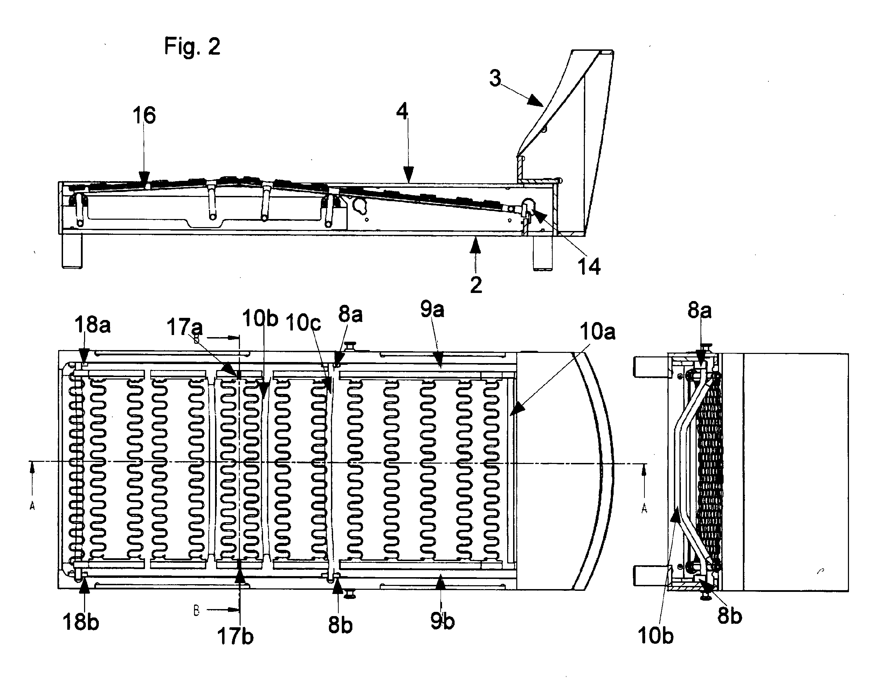

Fig. 2 shows the chaise longue with the seat part 4 in a second position, where the seat part is tilted downwards towards the back rest 3. When the seat part is tilted the cross bar 9 closest to the back rest 3 tilt downwards, while the cross bar 9 closest to the flap 16 tilt upwards. The flap 16 thereby tilt upwards closest to the seat part 4 and will rotate around rotatable mounting member 18a, 18b so that flap 16 and seat part 4 form an angle larger that 0° in relation to each other.

Compared to other known solutions for a chaise longue or long seat, the present solution is distinguished by the seat and flap being hinged in distal points, and with a additional hinge point 17 connecting the seat and flap. The arrangement must be able to expand to allow the seat and flap to bend in relation to each other. Here, this is obtained by using a longitudinally expandable hinge point 17. In a first embodiment, the hinging can be conventional, with an ordinary two-part hinge with two socket pieces for connecting to the frame. The hinge can in a first end be firmly connected to the frame while the other end is allowed to slide freely inside the tube of the frame. Both ends may also be allowed to slide freely inside the tubes.

Thereby, in the hinge point, the frame will separate to some extent when the seat is tilted upwards.

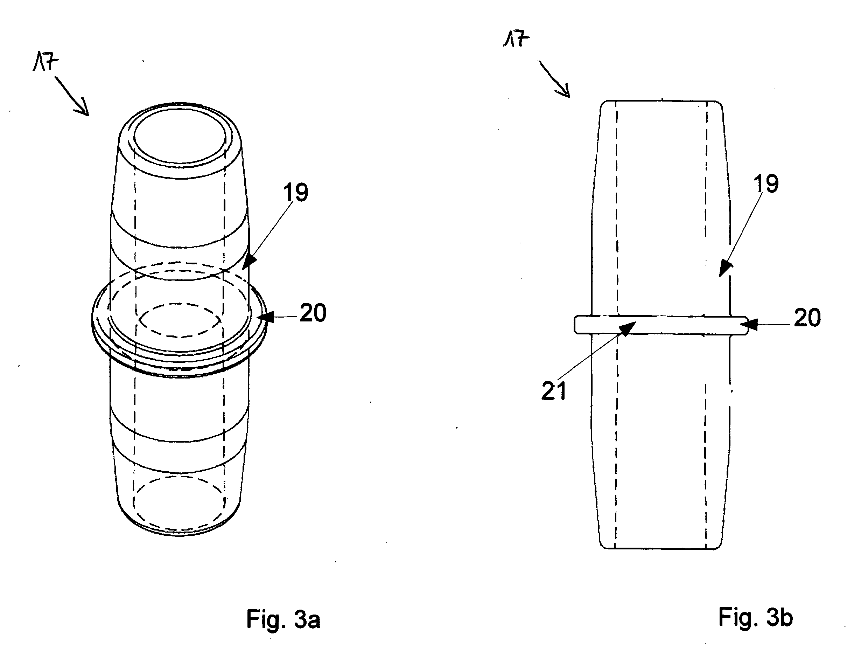

According to a further embodiment, the hinge point 17 is realized as an elastic coupling or joint as shown in fig. 3a and 3b. This is made of a tubular formed sleeve or socket piece 19 of an elastic polymeric material. The socket piece is conical towards both ends and is provided with a neck or collar 20 in the centre section. The socket piece is preferably completely or partly sealed with a wall 21 in the middle of the tube. To form a joint, the socket piece 19 is slided into a pipe end of each of two elements to be connected in a rotatable manner in such a way that the first pipe end more or less cover one end of the socket piece and the second pipe end covers the second end of the socket piece.

This coupling is easy to mount as it is merely slided into the pipe ends of the frames. It is made in one single piece and is consequently wear proof. Furthermore, it will not creak when used. The design of the socket also allows the pipe ends to, to some extent, slide longitudinally in relation to the socket piece, eliminating a source of tension or stress in the frame construction.

Even if the shown embodiment is hollow, it is also possible to make a massive socket piece, where it will form a round longitudinal element with conical ends and a collar in the middle section. However, the hollow design might provide a stiffer element due to different stress distributions over the cross section of a hollow and a massive joint piece, in addition to the possibility of great flexibility in the design of the element. The partition wall in the middle section of the socket piece might provide further stiffening of the element, thereby providing durability and strength.

Even if the socket piece is presented in connection with a chaise longue, it is also possible to use the element in other joints where it is a desire to obtain a rotatable flexible coupling between to parts where the connection can be made by means of two tubular elements being connected with a socket piece as shown in figure 3.

## Claims

1. Chaise longue comprising a sofa frame (2), seat part (4) and back rest (3), where the seat part (4) comprises side bars (9a,9b), cross bars (10a,10b) and seat springs (7),
**characterised in that** the back rest (3) is fixed, the seat part (4) is rotatably connected to the sofa frame (2) by means of mounting devices (8a,8b) below the sitting surface of the seat part (4), one or more balance springs (14) are arranged between the seat part (4) and the sofa frame (2), a shutter or flap (16) is rotatably mounted to the seat part (4) with pivotable joints (17a,17b), the shutter or flap (16) is rotatably connected to the sofa frame (2) in points (18a,18b) at the shutter of flap (16) opposite end of the attachement to the seat part (4) by the joints (17a, 17b).

2. Chaise longue according to claim 1, where the rotatable joints (17a,17b) are elastic joints (17).

3. Chaise longue according to claim 1, where the rotatable mounting arrangements (8) are arranged at approximately one third of the distance from the front edge of the seat towards the back rest.

4. Chaise longue according to any of the claim 2,
**characterised in that** said elastic joints (17) each comprises a tubular formed sleeve or pipe socket (19) being conical in both ends, and a collar (20) arranged at the centre of the pipe socket, where each joint is produced In a suitable polymeric material.

5. Chaise longue according to claim 4, where the tubular formed sleeve comprises an internal wall (21) completely or partly sealing the sleeve.

## Patentansprüche

1. Chaiselongue umfassend einen Sofarahmen (2), ein Sitzteil (4) und eine Rückenlehne (3), wobei das Sitzteil (4) Seitenholme (9a, 9b), Querstangen (10a, 10b) und Sitzfedern (7) umfasst,
**dadurch gekennzeichnet, dass** die Rückenlehne (3) unbeweglich ist, das Sitzteil (4) rotierbar mit dem Sofarahmen (2) durch Montiervorrichtungen (8a, 8b) unterhalb der Sitzfläche des Sitzteils (4) verbunden ist, eine oder mehrere Federgewichtsausgleichvorrichtungen (14) zwischen dem Sitzteil (4) und dem Sofarahmen (2) angeordnet sind, eine Sicherung oder Klappe (16) rotierbar an das Sitzteil (4) mit drehbaren Verbindungen (17a, 17b) montiert ist, wobei die Sicherung oder Klappe rotierbar mit dem Sofarahmen (2) an Stellen (18a, 18b) an dem entgegengesetzten Sicherungs- oder Klappenende der Befestigung an das Sitzteil (4) durch die Verbindungen (17a, 17b) verbunden ist.

2. Chaiselongue nach Anspruch 1, wobei die rotierbaren Verbindungen (17a, 17b) elastische Verbindungen (17) sind.

3. Chaiselongue nach Anspruch 1, wobei die rotierbaren Montieranordnungen (8) bei etwa einem Drittel der Entfernung von der vorderen Kante des Sitzes auf die Rückenlehne zu angeordnet sind.

4. Chaiselongue nach Anspruch 2, **dadurch gekennzeichnet, dass** die elastischen Verbindungen (17) jeweils eine röhrenförmige Muffe oder einen Rohrstutzen (19) umfassen, die/der an beiden Enden konisch ist und ein Bund (20) in der Mitte des Rohrstutzens angeordnet ist, wobei jede Verbindung aus einem geeigneten polymeren Material gefertigt ist.

5. Chaiselongue nach Anspruch 4, wobei die röhrenförmige Muffe eine Innenwand (21) umfasst, die vollständig oder teilweise die Muffe verschließt.

## Revendications

1. Chaise longue comprenant un châssis de sofa (2), une partie de siège (4) et un dossier (3), où la partie de siège (4) comprend des barres latérales (9a, 9b), des barres transversales (10a, 10b) et des ressorts de siège (7),
**caractérisée en ce que** le dossier (3) est fixe, la partie de siège (4) est raccordée à rotation au châssis de sofa (2) au moyen de dispositifs de montage (8a, 8b) en dessous de la surface de repos de la partie de siège (4), un ou plusieurs ressorts d'équilibrage (14) est ou sont aménagés entre la partie de siège (4) et le châssis de sofa (2), un clapet ou un volet (16) est monté à rotation sur la partie de siège (4) avec des articulations pivotantes (17a, 17b), le clapet ou le volet (16) est raccordé à rotation au châssis de sofa (2) en des points (18a, 18b) à l'extrémité, opposée au clapet ou au volet (16), de la fixation à la partie de siège (4) par les articulations (17a, 17b).

2. Chaise longue selon la revendication 1, dans laquelle les articulations rotatives (17a, 17b) sont des articulations élastiques (17).

3. Chaise longue selon la revendication 1, dans laquelle les aménagements de montage rotatifs (8) sont arrangés approximativement à un tiers de la distance du bord frontal du siège vers le dossier.

4. Chaise longue selon la revendication 2, **caractérisée en ce que** lesdites articulations élastiques (17) comprennent chacune une douille de forme tubulaire ou une tubulure (19) qui est conique aux deux extrémités et un collet (20) aménagé au centre de la tubulure, dans laquelle chaque articulation est constituée d'un matériau polymère approprié.

5. Chaise longue selon la revendication 4, dans laquelle la douille de forme tubulaire comprend une paroi interne (21) étanchant en totalité ou en partie la douille.
